# EUROPÄISCHE PATENTSCHRIFT

(11) **EP 3 728 886 B1**
(45) Veröffentlichungstag und Bekanntmachung des Hinweises auf die Patenterteilung: **17.11.2021**
(21) Anmeldenummer: 18839670.9
(22) Anmeldetag: 18.12.2018
(51) Int. Cl.: F16D 3/06

(54) **KUPPLUNG UND VERFAHREN ZUR VERWENDUNG**
COUPLING AND METHOD FOR USE
COUPLEUR ET SON PROCÉDÉ D'UTILISATION

(30) Priorität: 18.12.2017 DE 102017011677
(43) Veröffentlichungstag der Anmeldung: 28.10.2020
(73) Patentinhaber: KBK Antriebstechnik GmbH, 63911 Klingenberg (DE)
(72) Erfinder: KARPSTEIN, Sven, 63911 Klingenberg (DE)
(74) Vertreter: Nitz, Astrid
(86) Internationale Anmeldenummer: PCT/DE2018/000372
(87) Internationale Veröffentlichungsnummer: WO 2019/120351

(56) Entgegenhaltungen:
- EP-A1- 0 318 669
- EP-A1- 1 306 570
- WO-A1-2005/019671
- US-A1- 2004 002 391
- US-B1- 6 217 457

## Beschreibung

Die Erfindung betrifft eine Kupplung zur Aufnahme von zwei Wellenelementen nach dem Oberbegriff von Anspruch 1, und Verfahren zum Verwendung einer Kupplung nach dem Oberbegriff von Anspruch 9.

Bekannt sind Steckkupplungen bestehend aus positiven und negativen Steckpartnern, die drehformschlüssig ineinander gesteckt werden können. Sie dienen einer möglichst spielfreien Übertragung einer Drehbewegung sowie der Dämpfung von Kraftstößen.

Als nachteilig erweist sich bei der Anwendung der Kupplung auf Wellen, dass er insbesondere bei bewegungsintensiven Gerätschaften, mit vielen Störungen und seitlichen Ausweichbewegungen, dass die Kupplung im Stand der Technik entweder zu steif aufgebaut ist oder zu viel Spiel ermöglichen, also ungenau agieren. Einige Stand der Technik Beispiele sind in EP 1 306 570 A1, US 6 217 457 B1 und US 2004/002391 A1 offenbart.

Aufgabe der vorliegenden Erfindung ist es, eine Kupplung für Wellen bereitzustellen, die es ermöglicht, unter Vermeidung der Nachteile des Stands der Technik eine wiederholbar spielfreie Betätigung zu erreichen.

Die Aufgabe wird gelöst durch eine Kupplung zur Aufnahme von zwei Wellenelementen, umfassend einen festen Kupplungspartner mit einem Aufnahmemittel für die Aufnahme des ersten Wellenelements mit einer Kupplungszentrallängsachse, und einem bezogen auf die Kupplungszentrallängsachse beweglichen Kupplungspartner mit einem Aufnahmemittel für die Aufnahme des zweiten Wellenelements, wobei der bewegliche Kupplungspartner relativ zum festen Kupplungspartner mittels einer Führung parallel zur Kupplungszentrallängsachse axial verstellbar ist, wobei der feste Kupplungspartner zwei fest angeordnete, beabstandete Halteringe mit dazwischen angeordneten Bolzenverbindungsmitteln aufweist, wobei zwischen den Halteringen auf den Bolzenverbindungsmitteln laufend ein beweglicher Verschiebering, der dem beweglichen Kupplungspartner zugeordnet ist, mit mit den Bolzenverbindungsmitteln korrespondierenden Buchsenaussparungen, die hinsichtlich ihrer Anzahl, Anordnung und Geometrie derart korrespondierend ausgebildet sind, dass sie eine Axialführung bieten, wobei jeweils zwei benachbarte Bolzenverbindungsmittel im Bereich der korrespondierenden Buchsenaussparung einander zugeneigt ausgebildet sind, insbesondere ein Bolzenverbindungsmittel nach links und ein Bolzenverbindungsmittel nach rechts versetzt. Durch die vorgeschlagene Vorrichtung wird eventuelles Spiel der Bolzenverbindungsmittel sicher eliminiert.

Die vorliegende Erfindung ermöglicht durch eine zuverlässige Bolzen-/Buchsenführung eine torsionssteife, spielfreie Führung und Axialpassung von Kupplungselemente mit einer hohen Lebensdauer. Im Stand der Technik findet sich beispielsweise bei Zahnwellen und Keilwelle immer Spiel in Rotationsrichtung, so dass dabei insbesondere bei hohen Anforderungen an Präzision und Schnelligkeit Risiken beim Einkuppeln und Führen gegeben sind. Die vorliegende Kupplung weist neben der axialen Verstellbarkeit eine kompakte Bauweise auf mit einem großen möglichen Axialführungshub auf und ist sowohl innen als auch weit außen immer spielfrei. Weiterhin wird bei der vorliegenden Erfindung eine einfache Einbindung einer Einbindung eines Fehlerausgleichsmechanismus in Form beispielsweise einer Integration eines Balgs und/oder eines Federpakets.

Vorteilhaft ist es somit, wenn der bewegliche Kupplungspartner ein Ausgleichselement aufweist, das hinsichtlich eines Abweichungswinkels relativ zur Kupplungszentrallängsachse winklig verstellbar ist.

Vorteilhaft ist es, wenn der bewegliche Kupplungspartner mit seinem Ausgleichselement an einem Innenbereich des Verschieberings angeordnet ist.

Vorteilhaft ist es, wenn zumindest drei, insbesondere bis zu zehn, Bolzenverbindungsmittel und korrespondierende Buchsenaussparungen im Verschiebering vorgesehen sind.

Vorteilhaft ist es, wenn das Ausgleichselement des beweglichen Kupplungspartners ein Balgelement aufweist, das mit einem Ende in dem Verschiebering befestigt, insbesondere an einer Innenseite eingepresst und/oder eingeklebt ist.

Vorteilhaft ist es, wenn das Ausgleichselement des beweglichen Kupplungspartners ein Federpaket ist, das mit einem Ende in dem Verschiebering befestigt, insbesondere an einer Innenseite eingepresst und/oder eingeklebt, ist.

Vorteilhaft ist es, wenn jeweils eine Buchsenaussparung an einem oberen Teil und an einem unteren Teil des Verschieberings angeordnet ist.

Vorteilhaft ist es, wenn das Aufnahmemittel ein Schlitzmittel zum Einklemmen des Wellenelements aufweist.

Die Aufgabe wird ebenfalls gelöst durch ein Verfahren zum Verwendung einer Kupplung gemäß dem Anspruch 9.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind. Es zeigen:
- Fig. 1a: eine schematische perspektivische Ansicht einer erfindungsgemäßen Kupplung,
- Fig. 1b: eine schematische perspektivische Ansicht einer erfindungsgemäßen Kupplung,
- Fig. 1c: eine schematische perspektivische Ansicht einer erfindungsgemäßen Kupplung,
- Fig. 1d: ein schematischer Querschnitt einer erfindungsgemäßen Kupplung,
- Fig. 2: eine schematische perspektivische Ansicht einer erfindungsgemäßen Kupplung,
- Fig. 3a: eine schematische perspektivische Ansicht einer erfindungsgemäßen Kupplung und
- Fig. 3b: eine schematische perspektivische Ansicht einer erfindungsgemäßen Kupplung.

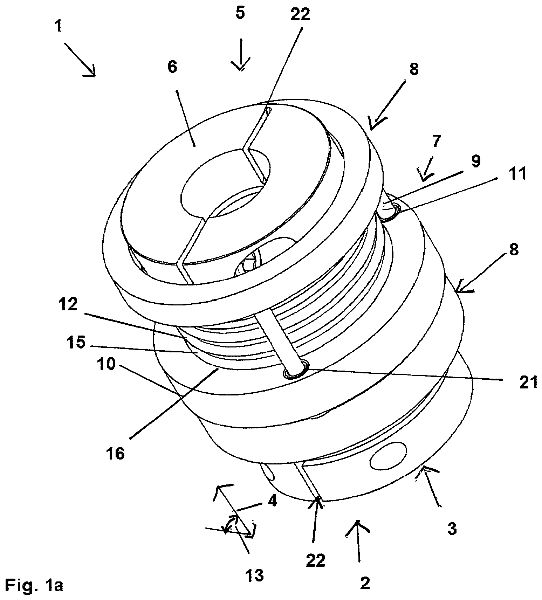

Fig.1a zeigt eine schematische perspektivische Ansicht einer Kupplung 1 zur Aufnahme von zwei nicht dargestellten Wellenelementen, beispielsweise mit einem Schlitzmittel 22, umfassend einen festen Kupplungspartner 2 mit einem Aufnahmemittel 3 für die Aufnahme des ersten Wellenelements mit einer Kupplungszentrallängsachse 4, und einem bezogen auf die Kupplungszentrallängsachse 4 und den festen Kupplungspartner 2 beweglichen Kupplungspartner 5 mit einem Aufnahmemittel 6 für die Aufnahme des zweiten Wellenelements, wobei der bewegliche Kupplungspartner 5 relativ zum festen Kupplungspartner 2 mittels einer Führung 7 parallel zur Kupplungszentrallängsachse 4 axial verstellbar ist, wobei der feste Kupplungspartner 2 zwei fest angeordnete, beabstandete Halteringe 8 mit dazwischen angeordneten Bolzenverbindungsmitteln 9 aufweist, wobei zwischen den Halteringen 8 auf den Bolzenverbindungsmitteln 9 laufend ein beweglicher Verschiebering 10, der dem beweglichen Kupplungspartner 5 zugeordnet ist, mit mit den Bolzenverbindungsmitteln 9 korrespondierenden Buchsenaussparungen 11, die hinsichtlich ihrer Anzahl, Anordnung und Geometrie derart korrespondierend ausgebildet sind, dass sie eine Axialführung bieten, wobei vorteilhaft der bewegliche Kupplungspartner 5 ein Ausgleichselement 12, beispielhaft in Form eines Balgelements 15, aufweist, das hinsichtlich eines Abweichungswinkels 13 relativ zur Kupplungszentrallängsachse 4 radial winklig verstellbar ist, wobei beispielhaft der bewegliche Kupplungspartner 5 mit seinem Ausgleichselement 12 an einem Innenbereich des Verschieberings 10 angeordnet ist. Beispielhaft sind mehrere Bolzenverbindungsmittel 9 und korrespondierende Buchsenaussparungen 11 im Verschiebering 10 vorgesehen. Beispielhaft kann das Ausgleichselement 12 des beweglichen Kupplungspartners 5 ein Balgelement 15 aufweisen, das mit einem Ende 16 in dem Verschiebering 10 befestigt, insbesondere an einer Innenseite eingepresst und/oder eingeklebt ist. Beispielhaft könnten jeweils eine Buchsenaussparungen 11 an einem oberen Teil und - nicht dargestellt - an einem unteren Teil des Verschieberings 10 angeordnet sein.

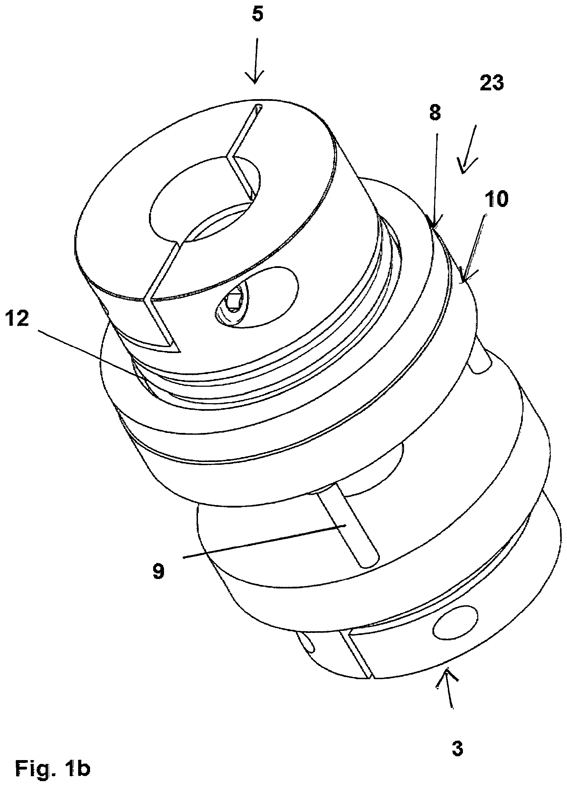

Fig. 1b zeigt eine schematische perspektivische Ansicht einer erfindungsgemäßen Kupplung 1, wobei der Verschiebering 10 an dem oberen Haltering 23 des festen Kupplungspartners 3 angeschlagen ist, und somit die Kupplung 1 axial weit ausgefahren ist. Ein weiterer, kleinerer Ausgleich wäre mit dem Ausgleichselement 12 am beweglichen Kupplungspartner 5 möglich.

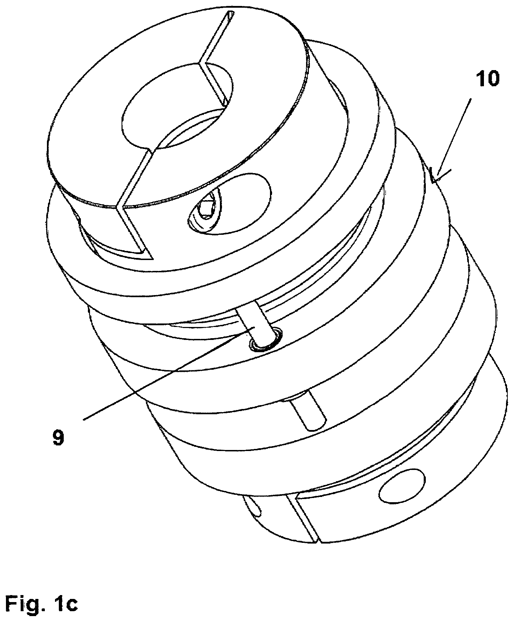

Fig. 1c zeigt eine schematische perspektivische Ansicht einer erfindungsgemäßen Kupplung 1, wobei der Verschiebering 10 axial in einer mittleren Position auf den Bolzenverbindungsmittel 9 sitzt.

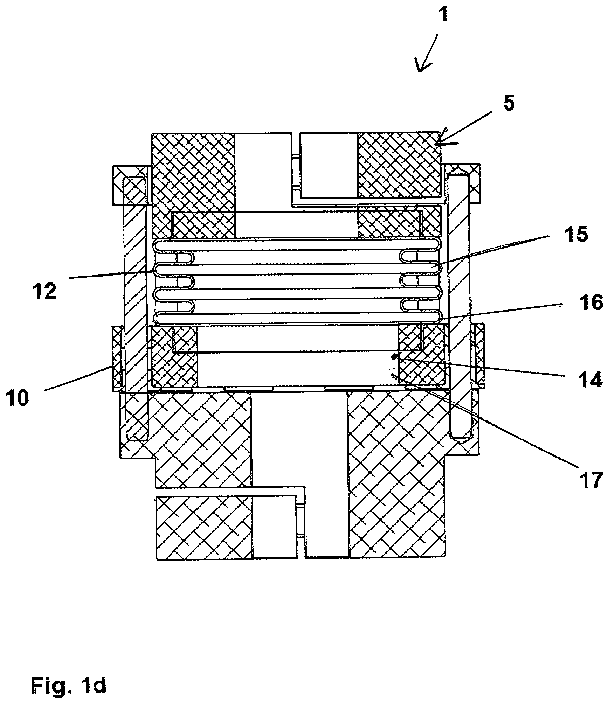

Fig. 1d zeigt einen schematischen Querschnitt einer erfindungsgemäßen Kupplung 1, wobei das Ausgleichselement 12 des beweglichen Kupplungspartners 5 ein Balgelement 15 aufweist, das mit einem Ende 16 in dem Verschiebering 10 befestigt, insbesondere an einer Innenseite 17 eingepresst und/oder eingeklebt ist.

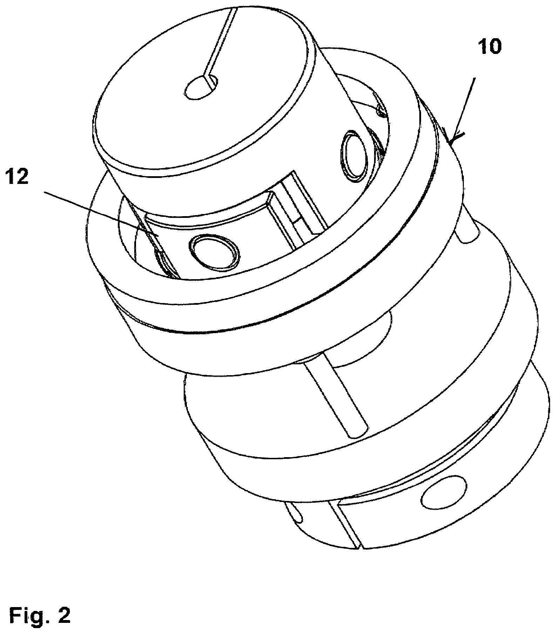

Fig. 2 zeigt eine schematische perspektivische Ansicht einer erfindungsgemäßen Kupplung 1, wobei das Ausgleichselement 12 beispielhaft ein Kardangelenk, das auch einen radialen Versatz ermöglicht, aufweist.

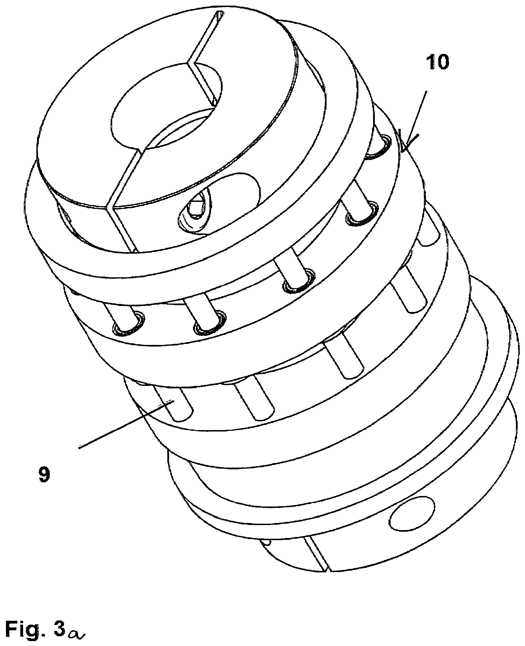

Fig. 3a zeigt eine schematische perspektivische Ansicht einer erfindungsgemäßen Kupplung 1, wobei beispielhaft eine Vielzahl von Bolzenverbindungselementen 9, auf denen der Verschiebering 10 sitzt, vorgesehen sind, so dass eine große Stabilität gegeben ist und bei Bedarf ein großer Wellenradius vorgesehen sein kann.

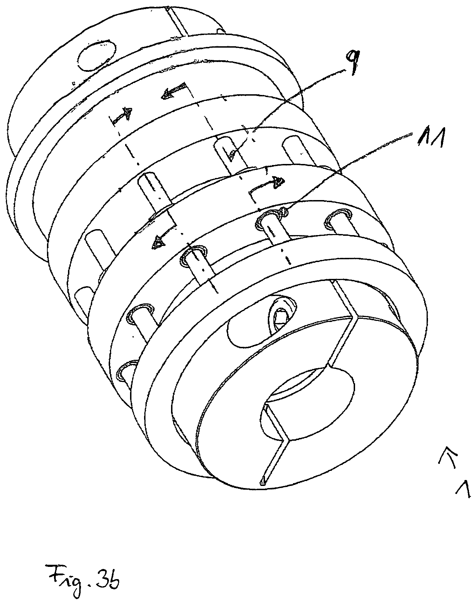

Fig. 3b zeigt eine schematische perspektivische Ansicht einer erfindungsgemäßen Kupplung 1, wobei beispielhaft zwei Bolzenverbindungselemente 9 aufeinander zugeneigt jedoch innerhalb einer Breite der Buchsenaussparungen 11 vorgesehen sind, so dass eine Verringerung des Spiels erzeugt wird.

### BEZUGSZEICHENLISTE

- 1: Kupplung
- 2: fester Kupplungspartner
- 3: Aufnahmemittel
- 4: Kupplungszentrallängsachse
- 5: beweglicher Kupplungspartner
- 6: Aufnahmemittel
- 7: Führung
- 8: Haltering
- 9: Bolzenverbindungsmittel
- 10: Verschiebering
- 11: Buchsenaussparung
- 12: Ausgleichselement
- 13: Abweichungswinkel
- 14: Innenbereich
- 15: Balgelement
- 16: Ende
- 17: Innenseite
- 22: Schlitzmittel
- 23: oberer Haltering

## Patentansprüche

1. Kupplung (1) zur Aufnahme von zwei Wellenelementen, umfassend einen festen Kupplungspartner (2) mit einem Aufnahmemittel (3) für die Aufnahme des ersten Wellenelements mit einer Kupplungszentrallängsachse (4), und einem bezogen auf die Kupplungszentrallängsachse (4) beweglichen Kupplungspartner (5) mit einem Aufnahmemittel (6) für die Aufnahme des zweiten Wellenelements, wobei der bewegliche Kupplungspartner (5) relativ zum festen Kupplungspartner (2) mittels einer Führung (7) parallel zur Kupplungszentrallängsachse (4) axial verstellbar ist, wobei der feste Kupplungspartner (2) zwei fest angeordnete, beabstandete Halteringe (8) mit dazwischen angeordneten Bolzenverbindungsmitteln (9) aufweist, wobei zwischen den Halteringen (8) auf den Bolzenverbindungsmitteln (9) laufend ein beweglicher Verschiebering (10), der dem beweglichen Kupplungspartner zugeordnet ist, mit mit den Bolzenverbindungsmitteln (9) korrespondierenden Buchsenaussparungen (11), die hinsichtlich ihrer Anzahl, Anordnung und Geometrie derart korrespondierend ausgebildet sind, dass sie eine Axialführung bieten, **dadurch gekennzeichnet, dass** jeweils zwei benachbarte Bolzenverbindungsmittel (9) im Bereich der korrespondierenden Buchsenaussparung (11) einander zugeneigt ausgebildet sind, insbesondere ein Bolzenverbindungsmittel (9) nach links und ein Bolzenverbindungsmittel (9) nach rechts versetzt.

2. Vorrichtung nach Anspruch 1, **dadurch gekennzeichnet, dass** der bewegliche Kupplungspartner (5) ein Ausgleichselement (12) aufweist, das hinsichtlich eines Abweichungswinkels (13) relativ zur Kupplungszentrallängsachse (4) winklig verstellbar ist.

3. Vorrichtung nach Anspruch 2, **dadurch gekennzeichnet, dass** der bewegliche Kupplungspartner (5) mit seinem Ausgleichselement (12) an einem Innenbereich (14) des Verschieberings (10) angeordnet ist.

4. Vorrichtung nach einem der Ansprüche 1 bis 3, **dadurch gekennzeichnet, dass** zumindest drei, insbesondere bis zu zehn Bolzenverbindungsmittel (9) und korrespondierende Buchsenaussparungen (11) im Verschiebering (10) vorgesehen sind.

5. Vorrichtung gemäß den Ansprüchen 1 bis 4, **dadurch gekennzeichnet, dass** das Ausgleichselement (12) des beweglichen Kupplungspartners (5) ein Balgelement (15) aufweist, das mit einem Ende (16) in dem Verschiebering (10) befestigt, insbesondere an einer Innenseite (17) eingepresst und/oder eingeklebt ist.

6. Vorrichtung gemäß den Ansprüchen 1 bis 4, **dadurch gekennzeichnet, dass** das Ausgleichselement (12) des beweglichen Kupplungspartners (5) ein Federpaket ist, das mit einem Ende in dem Verschiebering (10) befestigt, insbesondere an einer Innenseite eingepresst und/oder eingeklebt, ist.

7. Vorrichtung nach einem der Ansprüche 1 bis 6, **dadurch gekennzeichnet, dass** jeweils eine Buchsenaussparung (11) relativ zur Kupplungszentrallängsachse an einem oberen Teil und an einem unteren Teil des Verschieberings (10) angeordnet ist.

8. Vorrichtung nach einem der Ansprüche 1 bis 7, **dadurch gekennzeichnet, dass** das Aufnahmemittel (3, 6) ein Schlitzmittel (22) zum Einklemmen des Wellenelements aufweist.

9. Verfahren zum Verwendung einer Kupplung (1), insbesondere nach einem der Ansprüche 1 bis 8, zur axialen Verstellung bei aufgenommenen Wellenelementen, wobei ein fester Kupplungspartner (2) ein Aufnahmemittel (3) für die Aufnahme des ersten Wellenelements mit einer Kupplungszentrallängsachse (4) aufweist, und ein bezogen auf die Kupplungszentrallängsachse (4) beweglicher Kupplungspartner (5) ein Aufnahmemittel (6) für die Aufnahme des zweiten Wellenelements, wobei der bewegliche Kupplungspartner (5) relativ zum festen Kupplungspartner (2) mittels einer Führung (7) parallel zur Kupplungszentrallängsachse (4) axial verstellt wird, wobei der feste Kupplungspartner (2) zwei fest angeordnete, beabstandete Halteringe (8) mit dazwischen angeordneten Bolzenverbindungsmitteln (9) aufweist, wobei zwischen den Halteringen (8) auf den Bolzenverbindungsmitteln (9) ein beweglicher Verschiebering (10) läuft, der dem beweglichen Kupplungspartner zugeordnet ist, wodurch mit den Bolzenverbindungsmitteln (9) derart hinsichtlich ihrer Anzahl, Anordnung und Geometrie korrespondierend ausgebildeten Buchsenaussparungen (11) eine Axialführung hergestellt wird, **dadurch gekennzeichnet, dass** jeweils zwei benachbarte Bolzenverbindungsmittel (9) im Bereich der korrespondierenden Buchsenaussparung (11) einander zugeneigt ausgebildet sind, insbesondere ein Bolzenverbindungsmittel (9) nach links und ein Bolzenverbindungsmittel (9) nach rechts versetzt angeordnet wird.

## Claims

1. Coupling (1) for the holding of two shaft elements, comprising a fixed coupling partner (2) with a holding medium (3) for the holding of the first shaft element with a coupling central longitudinal axis (4) and a coupling partner (5) with a holding medium (6) for the holding of the second shaft element with reference to the coupling central longitudinal axis (4) moving coupling partner (5) with a holding medium (6) for the moving part Coupling partner (5) is axially adjustable relative to the fixed coupling partner (2) by means of a guide (7) parallel to the central longitudinal axis of the coupling (4), whereby the fixed coupling partner (2) has two fixed, spaced holding rings (8) with bolt connectors (9), between the holding rings (8) on the bolt connection means (9) continuously a movable displacement ring (10), which is assigned to the movable coupling partner, with socket recesses corresponding to the bolt connectors (9), which are formed in such a way as to correspond with their number, arrangement and geometry that they offer axial guidance
**characterised by** the fact that:
two adjacent bolt connectors (9) are inclined towards each other in the area of the corresponding socket recess (11), in particular one bolt connector (9) to the left and one bolt connector (9) to the right.

2. Device according to Claim 1, **characterised by** the movable coupling partner (5) having a compensating element (12) which is angularly adjustable with respect to an angle of deviation (13) relative to the longitudinal coupling central axis (4).

3. Device according to Claim 2, **characterised by** the positioning of the movable coupling partner (5) with its balancing element (12) on an interior area (14) of the displacement ring (10).

4. Device according to one of Claims 1 to 3, **characterised by** the provision of at least three, in particular up to ten bolt connectors (9) and corresponding socket recesses (11) in the sliding ring (10).

5. Device according to Claims 1 to 4, **characterised by** the fact that the compensating element (12) of the movable coupler (5) has a bellows element (15) which is fixed with one end (16) in the shifting ring (10), in particular pressed and/or glued on an inner side (17).

6. Device according to Claims 1 to 4, **characterised by** the fact that the compensating element (12) of the movable coupling partner (5) is a spring pack which is fixed with one end in the sliding ring (10), in particular pressed and/or glued on one side.

7. Device according to one of Claims 1 to 6, **characterised by** a socket recess (11) located relative to the coupling centre longitudinal axis at an upper part and a lower part of the displacement ring (10).

8. Device according to one of Claims 1 to 7, **characterised in that** the receiving medium (3, 6) has a slitting medium (22) for clamping the shaft element.

9. Method for using a coupling (1), in particular according to one of Claims 1 to 8, for axial adjustment in the case of shaft elements, where a fixed coupling partner (2) has a holding device (3) for the reception of the first shaft element with a coupling centre longitudinal axis (4) and a movable coupling partner (5) with respect to the coupling centre longitudinal axis (4). a mounting device (6) for the reception of the second shaft element, whereby the movable coupling partner (5) is axially adjusted relative to the fixed coupling partner (2) by means of a guide (7) parallel to the longitudinal central axis of the coupling (4), whereby the fixed coupling partner (2) is two fixed, spaced holding rings (8) with bolt connectors arranged in between (9) has a movable shifting ring (10) assigned to the movable coupling partner running between the holding rings (8) on the bolt connectors (9) which provides an axial guidance to the bolt connectors (9) in such a way as to their number, arrangement and geometry of the socket recesses (11) correspondingly formed in terms of their number, arrangement and geometry, **characterised by**: two adjacent bolt connectors (9) are tilted towards each other in the area of the corresponding socket recess (11), in particular one bolt connector (9) to the left and one bolt connector (9) to the right.

## Revendications

1. Accouplement (1) pour recevoir deux éléments d'arbre, comprenant un partenaire d'accouplement fixe (2) avec un récepteur (3) pour recevoir le premier élément d'arbre avec un axe longitudinal central d'accouplement (4), et un partenaire d'accouplement mobile (5) par rapport à l'axe longitudinal central de l'accouplement (4) avec un récepteur (6) pour recevoir le second élément d'arbre, le partenaire d'accouplement mobile étant 5) est réglable axialement par rapport au partenaire d'attelage fixe (2) au moyen d'un guide (7) parallèle à l'axe longitudinal médian de l'attelage (4), le partenaire d'attelage fixe (2) étant pourvu de deux supports espacés (8) avec des éléments de fixation de boulon (9) disposés entre eux; entre les anneaux (8) sur le support de boulon (9) la un anneau mobile (10), rattaché à l'élément d'attelage mobile, avec des écartements de carrousel (11), correspondant aux éléments de fixation de boulon (9), dont le nombre, l'agencement et la géométrie sont tels qu'ils offrent un guidage axial;
**caractérisés par**:
deux éléments d'assemblage de boulon voisins (9) sont inclinés l'un vers l'autre dans la zone d'ouverture correspondante du livre (11), en particulier un élément d'assemblage (9) vers la gauche et un élément d'assemblage (9) vers la droite.

2. Dispositif selon la revendication 1, **caractérisé par le fait que** le partenaire d'accouplement mobile (5) comporte un élément de compensation (12) réglable en angle par rapport à l'axe longitudinal central de l'accouplement (4) par rapport à un angle de déviation (13).

3. Dispositif selon la revendication 2, **caractérisé par le fait que** le partenaire d'accouplement mobile (5) et son élément de compensation (12) sont disposés sur une partie interne (14) de l'articulation (10).

4. Dispositif selon l'une des revendications 1 à 3, **caractérisé par le fait qu'**au moins trois éléments de liaison de boulon (9) et les dégagements correspondants (11) sont prévus dans l'anneau de déplacement (10).

5. Dispositif selon les revendications 1 à 4, **caractérisé par le fait que** l'élément de compensation (12) de la pièce d'attelage mobile (5) comporte un élément de balancier (15) fixé à l'anneau de déplacement (10) par une extrémité (16), en particulier sur une face intérieure (17).

6. Dispositif selon les revendications 1 à 4, **caractérisé par le fait que** l'élément de compensation (12) de la pièce d'attelage mobile (5) est un ensemble de ressorts fixé par une extrémité dans l'anneau de déplacement (10), en particulier pressé et/ou collé sur une face intérieure.

7. Dispositif selon l'une des revendications 1 à 6, **caractérisé par** la disposition d'un écartement de la douille (11) par rapport à l'axe longitudinal central de l'accouplement sur une partie supérieure et une partie inférieure de l'anneau de déplacement (10).

8. Dispositif selon l'une des revendications 1 à 7, **caractérisé par le fait que** le support d'absorption (3, 6) comporte un agent de fente (22) pour bloquer l'élément d'arbre.

9. Méthode d'utilisation d'un accouplement (1), en particulier selon l'une des revendications 1 à 8, pour le réglage axial des éléments d'arbre introduits, dans laquelle un partenaire d'accouplement fixe (2) comporte un récepteur (3) pour l'accouplement du premier élément d'arbre ayant un axe longitudinal central d'accouplement (4) et un accouplement mobile par rapport à l'axe longitudinal central d'accouplement (4) partenaire (5) un dispositif d'absorption (6) pour l'absorption du second élément d'arbre, le partenaire d'attelage mobile (5) étant orienté axialement par rapport au partenaire d'attelage fixe (2) au moyen d'un guide (7) parallèle à l'axe longitudinal central de l'attelage (4), le partenaire d'attelage fixe (2) étant fixé de façon fixe et espacée (8) muni d'un boulon entre eux muni d'un dispositif (9) avec, entre les anneaux de fixation (8) sur l'assemblage de boulon (9) un anneau mobile (10) qui est affecté au partenaire d'accouplement mobile, permettant d'obtenir un guidage axial avec les assemblages de boulon (9) formés de manière correspondante en nombre, disposition et géométrie (11). **caractérisée par le fait que** deux assemblages de boulons voisins (9) sont inclinés l'un vers l'autre dans le domaine de l'espace de butée correspondant (11), en particulier un assemblage de boulons (9) est placé vers la gauche et un assemblage de boulons (9) est placé vers la droite.
